# EUROPEAN PATENT SPECIFICATION

(11) **EP 1 381 198 B1**
(45) Date of publication and mention of the grant of the patent: **23.05.2007**
(21) Application number: 02015204.7
(22) Date of filing: 08.07.2002
(51) Int. Cl.: H04L 29/06, H04L 12/56

(54) **Convergence layers for network devices and method for transmitting data traffic**
Konvergenzschichten für Netzwerkgeräte und Verfahren zur Datenverkehrübertragung
Couches de convergence pour dispositifs de réseaux et procédé permettant de transmettre trafic de données

(43) Date of publication of application: 14.01.2004
(73) Proprietor: Sony Deutschland GmbH, 50829 Köln (DE)
(72) Inventor: Spalink, Gerd Advanced Techn. Center Stuttgart, 70327 Stuttgart (DE); Höfflinger, Jens, Advanced Techn. Center Stuttgart, 70327 Stuttgart (DE)
(74) Representative: Müller - Hoffmann & Partner

(56) References cited:
- EP-A- 0 971 518
- EP-A- 1 148 687
- WO-A-00/13436
- WO-A-01/22666
- WO-A-02/17565
- US-A- 5 737 495
- US-A- 6 028 842
- US-A- 6 122 263

## Description

The invention is related to a network device for use in an ad-hoc established device network, to a device network, and to a method for transmitting data traffic via a device network.

For a variety of home multimedia applications and business applications, it is important to establish networks, preferably wireless networks, for exchanging data and messages between different devices that are part of the network. In a typical business application scenario, a mobile terminal gets services over a fixed corporate or public infrastructure. In an exemplary home application scenario, a low-cost and flexible networking is supported to interconnect wireless digital consumer devices.

The ETSI Project BRAN (Broadband Radio Access Networks) has defined the standard HiperLAN (High Performance Radio Local Area Network), which provides high-speed multimedia communications between different broadband core networks and mobile terminals. HiperLAN/2 provides a flexible platform for a variety of business and home applications that can support a set of bit rates up to 54 Mbit/s. The HiperLAN/2 standard is an example how data can be transmitted between different devices in a wireless network. The invention is not limited to wireless networks according to the HiperLAN/2 standard, though. The invention is not limited to wireless networks. It can also be applied in wired networks.

A typical device network comprises several devices, with one of the devices acting as a controller that controls the other devices that act as mobile terminals. When different devices are brought within reach of each other, they start exchanging messages and establish a so-called ad-hoc network, with one of the devices assuming the control functionality.

In section 6.2 of ETSI BRAN HiperLAN2 Standard Spec: DLC home extension (ETSI TS 101 761-4 V1.3.2 (2002-01), it is described how multiple convergence layers supporting different external networking standards can be active simultaneously within one wireless local area network.

U.S. Patent 6,028,842 to Chapman et al. relates to dynamic traffic conditioning. The network to discovers the nature of the service for each traffic flow, classifies it dynamically, and exercises traffic conditioning by means of such techniques as admission control and scheduling when delivering the traffic downstream to support the service appropriately.

In International Application WO 00/ 13436 "A method and system for supporting the quality of service in wireless networks", a mechanism is provided for supporting differentiated services (quality of service) in a radio network. A radio access system is provided which supports the quality of service in data packet transmission over its air interface The system comprises a selection of predefined default radio flows having different quality of service characteristics and means for selecting a radio flow having appropriate quality of service characteristics for the packet to be transmitted over the air interface from the selection.

In European Patent Application EP 1148687 to H. Hameleers and F. Hundscheidt, a communication device and method of distributing data over a plurality of channels is described, where a first protocol implementation provided at a first layer has a plurality of media data streams, each media stream being associated with a type of media, and passes the streams to a lower layer. The lower layer comprises a second protocol implementation that is operable to identify the media data streams. In a third layer channels are provided that may be associated with different qualities of service. The second protocol implementation is also operable to perform the placing of a given media stream into a given channel on the basis of the type of media in the given media stream and the quality of service associated with the given channel.

In U.S. Patent 6,122,263 "Internet Access for Cellular Network", a method and system are disclosed for use with a mobile radio network, which receives and analyzes packets from a packet-switched fixed network, such as the Internet, and depending on the type of information received (e.g., speech, low speed data , or high speed WWW data), routes the information over an appropriate radio air interface to a mobile radio terminal. The speech information can be routed to mobile radio terminals over a conventional circuit-switched mobile radio link (e.g., a GSM traffic channel), the low speed data can be routed over a packet-switched mobile radio link (e.g., a GPRS traffic data channel), and the high speed data can be routed over a wideband broadcast radio link (e.g., a DAB network radio link). As a result, mobile radio terminals can advantageously enjoy full access to the Internet and thereby communicate effectively over the Internet with other mobile and wire-bound terminals.

U.S. Patent 5,737,495 to Adams et al. relates to managing multimedia data files in a computer network by receiving a request from a first unit on the network, processing the request to determine file attributes of the request and redirecting the request based on the file attributes of the request, to a second unit on the network. The invention further receives a response that includes data files streamed into separate data streams based on the file attributes of the response. The present invention also selects for use appropriate buffering protocol units and data transportation units, based on the file attributes of the data files in the separate data streams.

US Patent US 2002/0085567 discloses conversion of different external networking standards into network traffic of an internal protocol.

It is an object of the invention to provide a network device and a method for routing data traffic of an external networking protocol through a local area network, whereby interoperability between different external networking technologies is supported.

The object of the invention is solved by a network device according to claim 1, by a device network according to claim 13, and by a method for transmitting data traffic via a device network according to claim 21. A computer program product according to the present invention is defined in claim 24 and a computer readable storage medium is defined in claim 25.

According to the invention, the network device for a device network comprises a content detection layer for detecting the content type of external traffic received by said network device. In dependence of the detected content type, said external traffic is passed to a content-specific convergence layer that is dedicated to handling the respective content type. Furthermore, the network device comprises a set of content-specific convergence layers, which exchange network traffic with other network devices of said device network via content-specific connections. Said content-specific connections are suited to the requirements of the respective content type.

In prior art solutions, external traffic received by a network device has been passed, according to the protocol of said external traffic, to a protocol-specific convergence layer. For example, IEEE 1394 data traffic has always been handled by a IEEE 1394-specific convergence layer, and Ethernet traffic has been handled by an Ethernet-specific convergence layer. The respective convergence layer has been responsible for transmitting the external traffic to its respective target network device, whereby the connection for transmitting the external traffic within the device network has been set up according to said external network.

According to the invention, when external traffic is received by a network device, the content type of said external traffic is detected by a content detection layer. For example, it might be detected that the external traffic is "packet-based data traffic". Alternatively, said external traffic might be "real-time critical data traffic", for example an audio or video data stream. When the content type has been detected, the received data traffic is passed to a convergence layer that is specific for said type of content. Thus, instead of protocol-specific convergence layers, content-specific convergence layers are used for setting up and releasing connections to other network devices within the network, and for transmitting data traffic within the device network. The content specific connections that are built up by the content-specific convergence layers are suited to the requirements of the respective content type.

The invention is based on the fact that the requirements for a data transmission within a device network do not depend on the protocol of the external traffic in the first place. It is possible to transmit packet-based data traffic via a IEEE 1394 interface (IPover1394), though the standard IEEE 1394 is mostly used for the transmission of video data streams. Vice versa, it is also possible to transmit real-time critical data via an IP network, which is typically used for packet-based data transmission. The requirements for a data transmission within the device network depend in the first place on the content type of the external traffic. The requirements imposed by the content type define the parameters of the data connection that is established between the source network device and the target network device. For example, a real-time critical video data stream requires that the transmission delay never exceeds a predefined threshold, and that a fixed bandwidth is permanently available for said data transmission. Generally, there are no such restrictive requirements for packet-based data transmission.

According to the invention, for each content type, a specific convergence layer is provided, which handles data streams of said content type according to the content-specific requirements. The content-specific convergence layers are responsible for establishing and releasing content-specific connections within the device network, and for transmitting the respective external data traffic within the device network.

Within the network, the external traffic is transmitted from the source network device, which has received said traffic from an external network, to a target network device. On the part of the target network device, the arriving data stream is taken care of by a corresponding convergence layer that is responsible for the respective content type. To said target network device, any external network may be connected. The convergence layer on part of the target network device doesn't have to route the traffic to the external protocol said traffic has emanated from. Instead, the received data traffic may be mapped to any external protocol that is able to accept the respective content type. For example, a video data stream emanating from a IEEE 1394 interface can be mapped, after it has been transmitted within the device network, to a IEEE 1394 interface again. Alternatively, the video data stream can also be mapped, on part of the target network device, to an IP interface. This kind of data exchange between different external networking technologies has not been possible in the prior art. The inventive concept of content-specific convergence layers allows for an interoperability between different external networking standards. In case two completely different external network protocols can handle the same content type, it is possible to receive external traffic of a first external protocol, route said traffic through the device network, whereby an internal protocol is used, and map the traffic, on the part of the receiving network device, to a second external protocol. The device network can be seen as an adapting means for adapting a first kind of external traffic to a second kind of external traffic.

One advantage of the inventive solution is that the available bandwidth of the device network is used more effectively by allowing access to different traffic types. Another advantage is that new networking technologies and traffic types can be integrated easily into the existing convergence layer architecture. Due to the generic design of the relevant modules, large amounts of existing code can be reused in the process of the integration.

Preferably, one of said content types is real-time critical data, whereby said set of content-specific convergence layers comprises a convergence layer dedicated to handling real-time critical data. When real-time critical data, for example an audio or video data stream, is transmitted from a first network device to another network device of the device network, the following requirements have to be fulfilled: First of all, transmission delays that exceed a certain amount are not acceptable. Furthermore, for the transmission of a real-time critical data stream, a certain bandwidth has to be permanently available in order to allow for a continuous transmission of said data stream. A convergence layer dedicated to handling real-time critical data can set up content-specific connections within the device network that allow to fulfil the above-mentioned requirements.

Further preferably, one of said content types is packet-based data, whereby said set of content-specific convergence layers comprises a convergence layer dedicated to handling packet-based data. When regular packet-based data traffic has to be transmitted within the device network, there are no specific requirements concerning the transmission delay and available bandwidth as there are in case of real-time critical data. A convergence layer dedicated to handling packet-based data will therefore set up a content-specific connection for the transmission of said data, whereby the available network resources are used in a more flexible way. In particular, it is not necessary to reserve a predefined bandwidth for the transmission of said packet-based data.

According to a preferred embodiment of the invention, said external traffic is at least one of Ethernet traffic, IEEE 1394 traffic, UMTS traffic or PPP traffic. The Ethernet protocol is the major protocol for accessing the internet. IEEE 1394 is the most common standard for data exchange between audio and video devices and allows for large transmission bit rates. UMTS is an example for a third generation mobile communications protocol, and PPP (point-to-point protocol) permits to establish point-to-point connections between two devices. Thus, the network device can be connected to a large range of current networking technologies simultaneously.

Preferably, said network device comprises hardware connectivity for at least one of Ethernet traffic, IEEE 1394 traffic, UMTS traffic or PPP traffic. Data packets received via said hardware connections are converted into the internal network protocol of the device network. Vice versa, data packets of the internal network protocol received from other network devices are converted into data packets of the external networking technology. Then, these data packets are sent to the external network via said hardware connection.

Preferably, said network device is an access point of said device network. The task of an access point is to provide access to different external networking technologies and networking services, for example to the internet. Therefore, the access points should be equipped with multiple content-specific convergence layers in the first place, because said access points have to handle different kinds of data traffic received from various external networks.

According to a preferred embodiment of the invention, said content detection layer analyses if said Ethernet traffic is real-time critical traffic, e.g. in connection with RTP, RTCP, RSVP, or RTSP traffic, whereby in case said Ethernet traffic is real-time critical, it is passed to a convergence layer dedicated to handling real-time critical data. Each data packet of Ethernet data traffic comprises type field information indicating the content of the respective Ethernet data packet. Thus, the content detection layer can easily determine if said Ethernet traffic is real-time critical or not. If the result of analysing the type field information is that said Ethernet traffic is real-time critical, it is passed to the convergence layer that handles real-time critical data. Therefore, in the case of Ethernet packets, the detection of the respective content type can be implemented in a very simple way.

Further preferably, said content detection layer analyses if said Ethernet traffic is not real-time critical traffic, i.e. of some other protocol type and thus packet-based traffic, whereby in case said Ethernet traffic is not real-time critical, it is passed to a convergence layer dedicated to handling packet-based data. The type field information of an Ethernet packet indicates the content of said data packet. The content detection layer can easily detect whether the received Ethernet traffic is packet-based data traffic or not. Packet-based data traffic is passed to a convergence layer dedicated to handling this content type.

Preferably, said content detection layer analyses if said IEEE 1394 traffic is packet-based data traffic, whereby in case said IEEE 1394 traffic is packet-based data traffic, it is passed to a convergence layer dedicated to handling packet-based data. Further preferably, said content detection layer analyses if said IEEE 1394 traffic is real-time critical data traffic, whereby in case said IEEE 1394 traffic is real-time critical data traffic, it is passed to a convergence layer dedicated to handling real-time critical data. Via a IEEE 1394 interface, either real-time critical IEEE 1394 data traffic or packet-based data traffic (IPover1394) can be transmitted. Also with regard to 1394 traffic, it is possible to analyse at low expense the respective content type. According to the content type, the IEEE 1394 traffic is either passed to a convergence layer for handling real-time critical data, or to a convergence layer for handling packet-based data traffic.

According to a preferred embodiment of the invention, said content-specific convergence layers comprise a common part, which segments data packets of said external traffic into a multitude of corresponding data packets of said device network's internal protocol, and which reassembles data packets of said device network's internal protocol into corresponding data packets of the respective external traffic. All the external networking technologies mentioned so far have one thing in common: They use variable size data packets which comprise more bytes than the rather small LCH (Long Transport Channel) data packets used within the HiperLAN/2 network, which only comprise 48 bytes. Therefore, data packets of the external protocol have to be segmented into a multitude of HiperLAN/2 data packets. Data packets received from the HiperLAN/2 network have to be reassembled into the data packets of the respective external protocol. Instead of providing each one of the convergence layers with a unit for segmenting and reassembling data packets, this task is accomplished, for all the convergence layers, by the common part of the convergence layers. The common part segments data packets arriving from the respective external network into a multitude of data packets of the internal network's protocol, and reassembles data packets of the internal protocol into variable size data packets of the respective external protocol. By implementing said common part, the structure of the content-specific convergence layers can be simplified. Another advantage is that in case a new convergence layer for another content type is to be implemented, programming said new convergence layer is simplified, because the functionality of the common part can be used.

Preferably, said content-specific convergence layers are operable to be used simultaneously within the same device network. Therefore, a network device can simultaneously handle data streams of different content type.

According to the invention, a device network is set up, which comprises at least one network device with a content detection layer, and with a set of content-specific convergence layers as described above.

Preferably, content-specific connections are set up and released between the network devices of said device network, whereby a content-specific connection is set up between a content-specific convergence layer of a first network device which supports a certain content type, and a respective content-specific convergence layer of a second network device which supports the same content type. Between convergence layers supporting the same content type, a connection can be established. As soon as the connection is established, any amount of data packets can be transmitted between the two content-specific convergence layers. By defining content-specific connections for handling data transmissions within the ad-hoc established device network, it is possible to define the parameters of the data transmission according to the content type, and to choose these parameters according to the desired bandwidth, error handling, etc.

According to a preferred embodiment of the invention, the external traffic exchanged with said content-specific convergence layer of said first network device may be of a different kind than the external traffic exchanged with said content-specific convergence layer of said second network device. On the part of the target network device, the received data stream may be forwarded to any external protocol that is willing and able to accept the respective content type. The data stream that has been transmitted via the ad-hoc established device network can thus be distributed to an external network that is different from the external network the data stream has emanated from. Data traffic from a first external networking technology may be routed to a second external networking technology. The device network serves as an adapting means for all kinds of network traffic. This makes the device network, preferably the wireless LAN technology, much more powerful and flexible.

Preferably, in case said content-specific connection is for a content type which requires a quality of service feature, a fixed bandwidth is reserved for said content-specific connection. The "quality of service" feature is a well-known feature for the transmission of video data. A certain bandwidth is reserved for the transmission of the video data stream, and thus, a certain quality of service (QoS) is guaranteed. When transmitting video data streams or any other data traffic supporting the quality of service feature via a device network, it is possible to set up the connection in a way that the quality of service feature is supported.

Further preferably, for each content-specific connection, the content type supported by said content-specific connection is registered. Any traffic transmitted via the content-specific connection can be passed, on the part of the target network device, to the corresponding content-specific convergence layer dedicated to handling the respective content type.

Further preferably, said device network is a wireless local area network (WLAN), and in particular a HiperLAN/2 network. HiperLAN/2 is a European standard for wireless local area networks.

According to a preferred embodiment of the invention, the exchange of control messages and data packets between different network devices of said device network is effected according to a TDMA transmission scheme. Preferably, a set of time slots of said TDMA transmission scheme may be reserved for a certain content-specific connection. By doing this, a predefined transmission capacity can be assigned to a certain connection. This is one way of realizing the above-mentioned quality of service feature.

Further features and advantages of preferred embodiments according to the present invention will be explained below in conjunction with the accompanying drawings, in which
- **Fig. 1**: shows how different networking technologies interact in order to provide a networking environment;
- **Fig. 2**: shows a wireless local area network comprising two network devices according to the prior art;
- **Fig. 3**: shows a wireless local area network, whereby both real-time critical and regular packet-based data streams are transmitted via the wireless LAN;
- **Fig. 4**: depicts the structure of the protocol stack for the HiperLAN/2 standard; and
- **Fig. 5**: shows how higher layer packets, for example Ethernet packets, are mapped onto layers of the HiperLAN/2 standard.

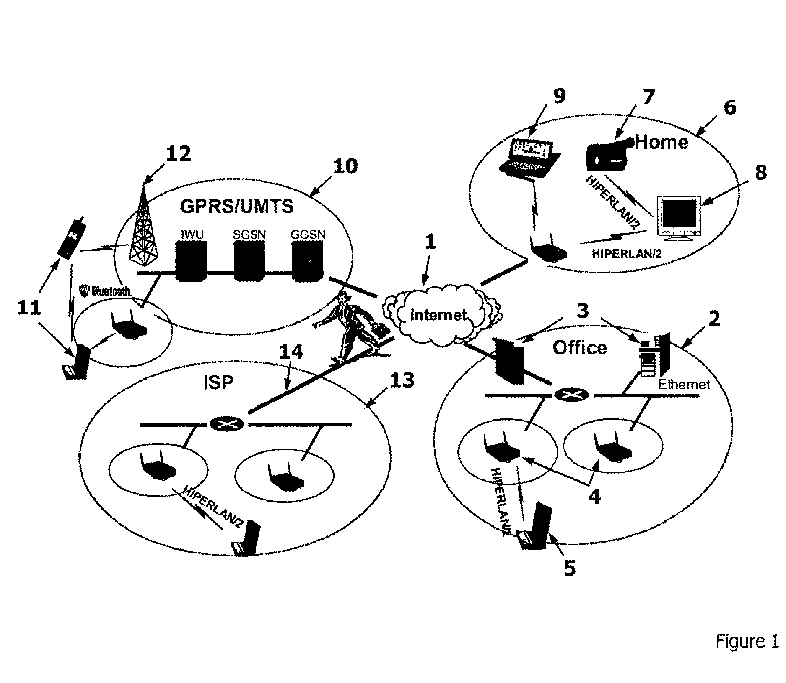

Fig. 1 shows the interplay of different network protocols in a networking environment. The Internet 1 provides the backbone for all kinds of data exchange services. In an office environment 2, servers 3 and access points 4 for wireless data transmission are connected by means of the Ethernet protocol. In order to establish wireless local area networks for connecting mobile terminals 5 to said access points 4, the Ethernet protocol can be converted into a suitable protocol for wireless data transmission, e.g. into the HiperLAN/2 protocol. Also in a home environment 6, the HiperLAN/2 protocol is used for establishing an ad-hoc device network for exchanging data between audio and video devices 7, personal computers 8, organizers 9, etc. In the field of mobile communication 10, the standards GPRS and UMTS are used for exchanging data packets between mobile devices 11 and base stations 12, and for accessing the Internet 1. For small distances, the Bluetooth protocol is used. For all these applications, the Internet Service Provider 13 provides a high-bandwidth backbone 14 and all kinds of data exchange services (email, world wide web, WAP, FTP, etc.).

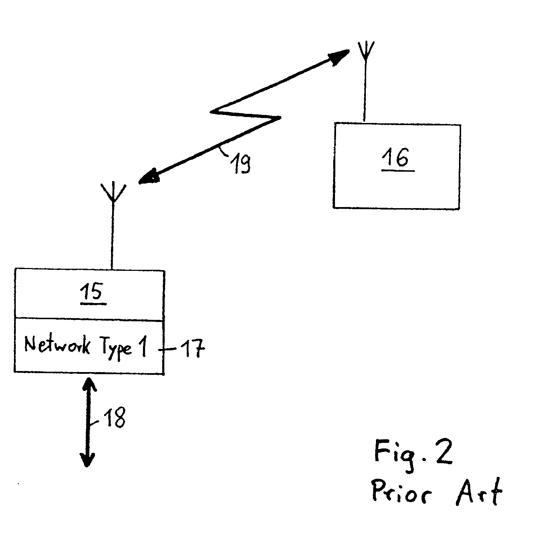

In Fig. 2, a wireless local area network of the prior art is shown. The wireless local area network comprises an access point 15, which acts as a central controller for the network, and a mobile terminal 16. The mobile terminal 16 exchanges data packets with the access point 15 via the HiperLAN/2 protocol. The access point 15 comprises hardware connectivity for an external network protocol, the Network Type 1 (18), e.g. for the Ethernet. Furthermore, the access point 15 comprises a Network Type 1 convergence layer 17 for converting data packets received via the Network Type 1 (18) into the HiperLAN/2 standard (19), and for converting data packets received via the HiperLAN/2 (19) into the Network Type 1 standard (18).

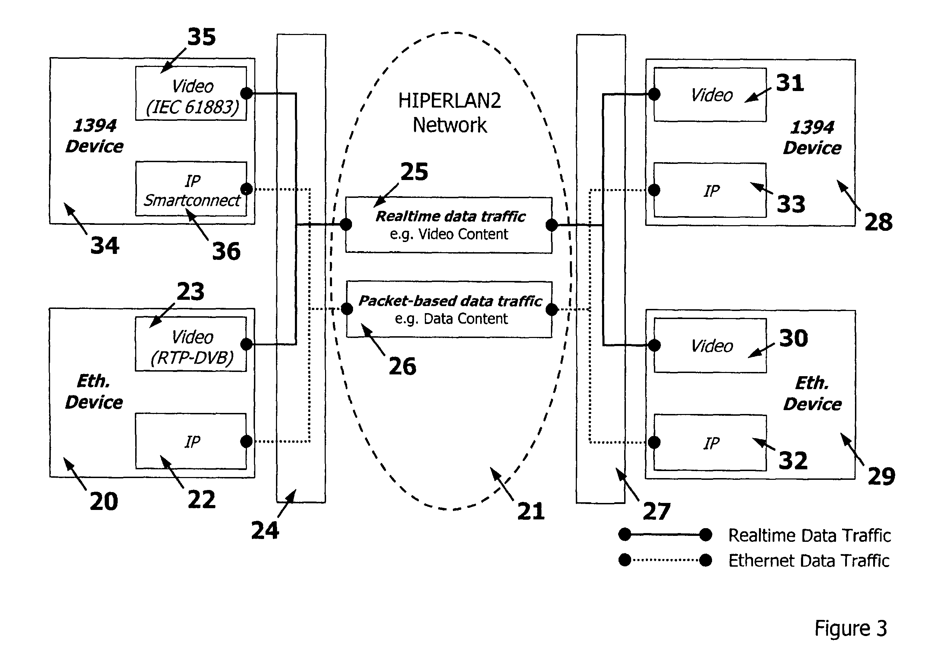

In Fig. 3, a device network comprising four network devices with content-specific convergence layers are shown. An Ethernet device 20, which is connected to the Ethernet via IP (Internet Protocol), is part of the device network 21. Preferably, the device network is a wireless local area network (LAN), in particular according to the HiperLAN/2 standard. The Ethernet device 20 can receive regular IP traffic 22 from the Internet. Regular packet-based IP traffic is transmitted according to protocols aside from those that are explicitly used for real-time critical data (e.g. RTP, RTCP, RSVP, or RTSP). The Ethernet device 20 can also receive real-time critical data traffic 23 via the Ethernet interface, e.g. a video data stream. For the transmission of real-time critical data traffic via an IP network, currently the protocols RTP (Real-Time Protocol), RTCP (Real-Time Control Protocol), RSVP (resource ReSerVation Protocol), and RTSP (Real-Time Streaming Protocol) are used.

Let us assume that real-time critical video data stream 23 emanating from the Ethernet device 20 shall be transmitted via the device network 21 to other network devices. The video data stream 23 is first passed to a content detection and routing layer 24, and said content detection and routing layer 24 detects that the arriving data stream utilizes one of the real-time critical protocol types. Therefore, the content type is identified as "real-time critical data traffic". Accordingly, the real-time critical data stream is forwarded to a convergence layer 25 dedicated to handling "real-time critical data traffic". Besides the convergence layer 25, other content-specific convergence layers exist, e.g. the convergence layer 26, which is dedicated to handling "packet-based data traffic".

The content-specific convergence layer 25 establishes a content-specific connection with a corresponding convergence layer on the part of the target network device. In case real-time critical data traffic has to be transmitted, the convergence layer 25 reserves a certain predefined bandwidth when establishing the connection to the respective target network devices. Then, the IP data packets of the real-time critical data traffic are segmented into a set of corresponding data packets of the internal protocol of the device network 21. This task can be carried out by a separate module which is a common part of the content-specific convergence layers 25 and 26. In case the device network 21 is a HiperLAN/2 network, 48 byte packets of the type LCH (Long Transport Channel) are used within the device network 21.

Now, the video data stream 23 of our example is transmitted via the device network 21 to the respective target network devices. There, the arriving data packets are forwarded to a content detection and routing layer 27. In case a target network device, e.g. a IEEE 1394 device 28 or an Ethernet device 29, has indicated that it is willing to accept a respective traffic type, the content detection and routing layer 27 forwards the received data stream to the respective target device. In case the Ethernet device 29 has indicated that it is willing to accept the video data stream, the received video data stream is routed (30) to the Ethernet device 29. There, the short LCH data packets are reassembled to build IP packets, and the real-time critical video data stream is again converted into an appropriate protocol for real-time critical data. The video data stream can then be forwarded to the IP network to which the Ethernet device 29 is connected.

So far, it has been described how the video data stream 23, which is an IP data stream, is converted to the device network's internal protocol and transmitted via said device network to another Ethernet device 29. The video data stream 23, which has emanated from an IP network, doesn't have to be routed to an Ethernet device, though. The content detection and routing layer 27 can also route the received real-time critical data stream to the IEEE 1394 device 28 when the IEEE 1394 device 28 requests it. On part of the IEEE 1394 device 28, the LCH data packets of the internal protocol are reassembled into a video data stream 31 according to the IEEE 1394 protocol. The real-time critical video data stream can then be forwarded to the IEEE 1394 network to which the IEEE 1394 device 28 is connected. The inventive concept of content-specific convergence layers and content-specific routing allows to transform a real-time critical IP data stream into an IEEE 1394 data stream. Besides that, it is also possible to transmit the real-time critical video data stream 23 emanating from the Ethernet to both an Ethernet device 29 and a IEEE 1394 device 28.

In the following, a second example will be discussed. On the part of the Ethernet device 20, regular IP traffic 22 is received from the Internet. The regular IP traffic is passed to the content detection and routing layer 24, which detects that the content type is "packet-based data traffic", which is not real-time critical. The regular IP traffic 22 is then passed to the convergence layer 26, which is dedicated to handling "packet-based data traffic". The IP packets are segmented into the LCH data packets used within the HiperLAN/2 network. A connection is set up within the device network 21, and the data traffic is transmitted to the content detection and routing layer 27. From there, the traffic can be routed to the Ethernet device 29. The received packets of the internal protocol are reassembled into IP packets, and the IP data stream 32 is obtained.

Alternatively or additionally, the data traffic can be routed from the content detection and routing layer 27 to the IEEE 1394 device 28. There, the received packets of the internal protocol are reassembled into data packets according to the IEEE 1394 standard. Though the IEEE 1394 standard is intended for the transmission of audio and video data streams in the first place, it is also possible to transmit IP data packets via an IEEE 1394 interface. This is called "IPover1394". Such an "IPover1394" data stream 33 is obtained on the part of the IEEE 1394 device 28.

Both real-time critical data streams and regular packet-based data traffic can also emanate from a IEEE 1394 device 34 that is connected to an external IEEE 1394 network. The video data stream 35 can be transmitted from the IEEE 1394 device 34 via the convergence layer 25 and the device network 21 to the IEEE 1394 device 28, or to the Ethernet device 29, or to both said devices. The IPover1394 data traffic 36 is passed to the convergence layer 26, which handles packet-based data traffic. Via the device network 21, the data traffic is routed to the IEEE 1394 device 28, or to the Ethernet device 29, or to both said devices.

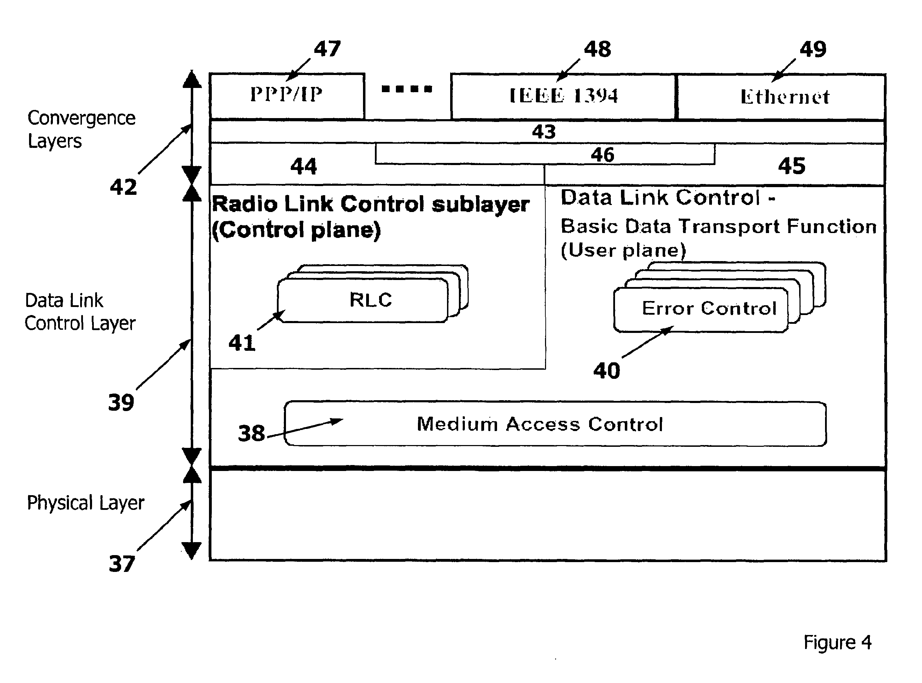

In Fig. 4, the so-called protocol stack for the HiperLAN/2 standard is shown. The bottom layer is the Physical Layer 37, which deals with the modulation type and the actual data transmission. The next layer is the Medium Access Control (MAC) 38, which is part of the Data Link Control Layer (DLC) 39. The MAC 38 schedules the data for transmission. A TDMA (Time Division Multiple Access) frame with time slots of 2 ms is used, and the MAC 38 assigns time slots of the TDMA frame to the various connections within the HiperLAN/2 network. The TDMA frame generated by the MAC 38 is the typical transmission standard in the HiperLAN/2 protocol. The Data Link Control Layer 39 further comprises an Error Control functionality 40. Furthermore, the Data Link Control Layer 39 comprises a Radio Link Control Sublayer (RLC) 41.

The highest layers of the HiperLAN/2 standard are the convergence layers 42, which comprise a content type detection and routing layer 43, a set of content-specific convergence layers 44, 45, and a common part 46 of said convergence layers. The content type detection and routing layer 43 detects the content type of arriving data traffic and passes said traffic to a corresponding content-specific convergence layer. The convergence layer 44 handles packet-based data traffic, whereby the convergence layer 45 handles real-time critical data traffic.

The common part 46 segments the variable size data packets of the respective external protocol into a multitude of data packets according to the HiperLAN/2 standard. Besides that, the common part 46 converts HiperLAN/2 packets into data packets of an external protocol by reassembling the HiperLAN/2 packets.

The respective hardware connectivity is addressed by means of drivers 47, 48, 49. The convergence layer 47 is responsible for handling the PPP (point-to-point) protocol, which is an external protocol used for point-to-point connections. The driver 48 supports the IEEE 1394 protocol, and the driver 49 supports the Ethernet protocol.

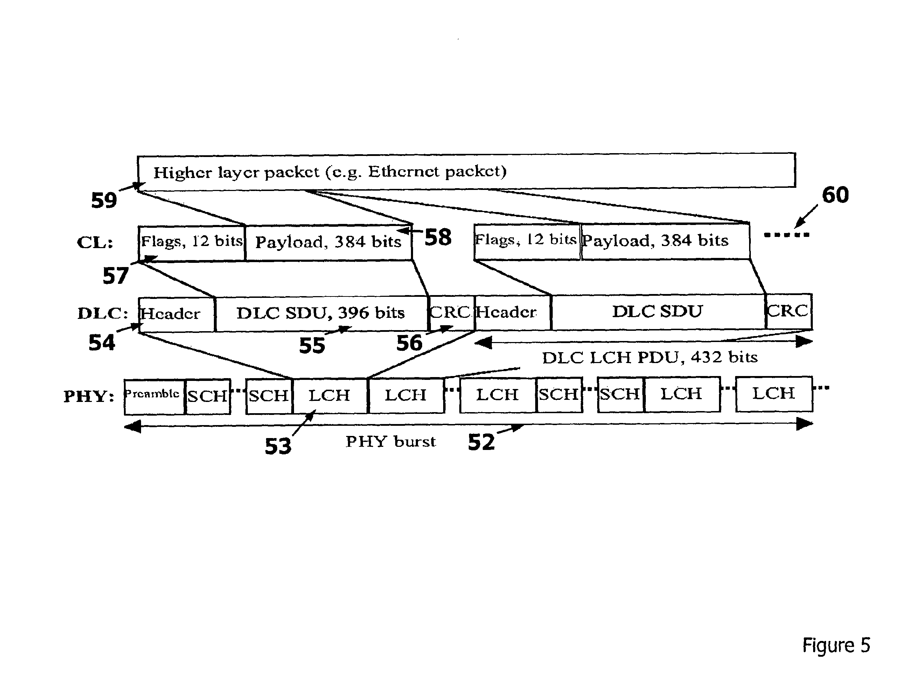

In Fig. 5, it is shown how higher layer packets, for example Ethernet packets, are mapped onto layers of the HiperLAN/2 standard. Again, the Physical Layer PHY is the bottom layer, and a PHY burst 52 comprising several Long Transport CHannel Packets (LCH) is shown. At the Data Link Control Layer (DLC), a Long Transport CHannel Packet (LCH) 53 is divided into a header 54, a DLC SDU 55, and a Cyclic Redundancy Check (CRC) 56. At the Convergence Layer (CL), the DLC SDU 55 is divided into 12 bits of flags (57) and 384 bits or 48 bytes of Payload (58). A higher layer packet, e.g. an Ethernet packet 59, is segmented into a multitude of these 48 bytes packets 58, 60, which are transmitted as LCH packets according to the HiperLAN/2 standard.

## Claims

1. Device network comprising at least a first (20) and a second (28) network device,
the first network device (20) comprising:
- a content detection and routing layer (24, 43) for detecting the content of first external traffic (22, 23) of a first external protocol received by said first network device (20), and for routing said first external traffic (22, 23), in dependence of the detected content, to a convergence layer (25, 26, 44, 45) dedicated to handling the respective content,
- a set of convergence layers (25, 26, 44, 45) adapted for converting the first external traffic (22, 23) of the first external protocol into network traffic of an internal protocol, and for exchanging the network traffic with other network devices (28, 29) of said device network (21) via content-specific connections, whereby said content-specific connections are suited to the requirements of the respective detected content, and with
said first network device being adapted to transmit the network traffic of the internal protocol to a second network device (28) of said device network (21) via said content-specific connections, and with
the second network device (28) comprising
- a set of convergence layers (25, 26. 44. 45) adapted for exchanging network traffic of the internal protocol with other network devices (20. 34) of said device network (21) via said content-specific connections, and for converting the network traffic of the internal protocol into a second external traffic (33, 31) of a second external protocol.

2. Device network according to claim 1,
wherein the second external protocol is a different protocol than the first external protocol.

3. Device network according to any one of the preceding claims,
wherein the convergence layers are adapted for setting up and releasing content-specific connections between the network devices of said device network, with a content-specific connection being set up between a convergence layer of the first network device which supports a certain content, and a respective convergence layer of the second network device which supports the same content.

4. Device network according to any one of the preceding claims,
wherein the convergence layers are adapted for reserving a fixed bandwidth for said content-specific connection in case said content-specific connection is for a content which requires a quality of service feature.

5. Device network according to any one of the preceding claims,
wherein the convergence layers are adapted for registering, for each content-specific connection, the content supported by said content-specific connection.

6. Device network according to any one of the preceding claims,
wherein said device network is a wireless local area network (WLAN), and in particular a HiperLAN/2 network.

7. Device network according to any one of the preceding claims,
wherein the exchange of control messages and data packets between different network devices of said device network is effected according to a TDMA transmission scheme.

8. Device network according to claim 7,
wherein the convergence layers are adapted for reserving a set of time slots of said TDMA transmission scheme for a certain content-specific connection.

9. Method for transmitting data traffic via a device network, comprising the steps:
- detecting a content of first external traffic of a first external protocol,
- routing said first external traffic, in dependence of the detected content, to a convergence layer (25, 26, 44, 45) dedicated to handling the respective detected content.
- converting the first external traffic of the first external protocol into network traffic of an internal protocol.
- transmitting the network traffic of the internal protocol to a second network device (28, 29) of said device network (21) via content-specific connections, whereby said content-specific connections are suited to the requirements of the respective detected content.
- converting, on the part of the second network device (28, 29), the network traffic of the internal protocol into a second external traffic of a second external protocol.

10. Method according to claim 9,
content-specific connections are set up between two network devices before transmitting said network traffic between said two network devices in accordance with said content.

11. Method according to claim 9 or 10,
wherein after the network traffic between said two network devices has been transmitted in accordance with said content, said content-specific connection between said two network devices is released.

12. Computer program product,
comprising computer program modules adapted to perform the method steps as defined in any one of the claims 9 to 11,
- whereby a first computer program module, when running on a first network device, causes this first network device to execute the steps of:
- detecting a content of first external traffic of a first external protocol,
- routing said first external traffic, in dependence of the detected content, to a convergence layer (25,26,44,45) dedicated to handling the respective detected content,
- converting the first external traffic of the first external protocol into network traffic of an internal protocol,
- transmitting the network traffic of the internal protocol to a second network device (28,29) of said device network (21) via content-specific connections, whereby said content-specific connections are suited to the requirements of the respective detected content.
- whereby a second computer program module, when running on a second network device, causes this second network device to execute the steps of:
- converting, on the part of the second network device (28,29), the network traffic of the internal protocol into a second external traffic of a second external protocol.

## Patentansprüche

1. Vorrichtungsnetzwerk mit mindestens einer ersten (20) und einer zweiten (28) Netzwerkvorrichtung,
wobei die erste Netzwerkvorrichtung (20) Folgendes aufweist:
eine Inhaltserkennungs- und Weiterleitungsschicht (24, 43) zum Erkennen des Inhalts von erstem externem Verkehr (22, 23) gemäß einem ersten externen Protokoll, wie er durch die erste Netzwerkvorrichtung (20) empfangen wird, und zum Weiterleiten dieses ersten externen Verkehrs (22, 23) in Abhängigkeit vom erkannten Inhalt an eine Konvergenzschicht (25, 26, 44, 45), die speziell zum Handhaben des jeweiligen Inhalts vorhanden ist;
eine Gruppe von Konvergenzschichten (25, 26, 44, 45), die dazu ausgebildet sind, den ersten externen Verkehr (22, 23) gemäß dem ersten externen Protokoll in Netzwerkverkehr gemäß einem internen Protokoll zu wandeln und den Netzwerkverkehr mit anderen Netzwerkvorrichtungen (28, 29) des Vorrichtungsnetzwerks (21) über inhaltsspezifische Verbindungen auszutauschen, wobei diese inhaltsspezifischen Verbindungen für die Erfordernisse des jeweils erkannten Inhalts geeignet sind; und
wobei diese erste Netzwerkvorrichtung so ausgebildet ist, dass sie den Netzwerkverkehr gemäß dem internen Protokoll über die inhaltsspezifischen Verbindungen an eine zweite Netzwerkvorrichtung (28) des Vorrichtungsnetzwerks (21) überträgt; und wobei diese zweite Netzwerkvorrichtung (28) Folgendes aufweist:
eine Gruppe von Konvergenzschichten (25, 26, 44, 45), die dazu ausgebildet sind, Netzwerkverkehr gemäß dem internen Protokoll über die inhaltsspezifischen Verbindungen mit anderen Netzwerkvorrichtungen (20, 34) des Vorrichtungsnetzwerks (21) auszutauschen und den Netzwerkverkehr gemäß dem internen Protokoll in einen zweiten externen Verkehr (33, 31) gemäß einem zweiten externen Protokoll zu wandeln.

2. Vorrichtungsnetzwerk nach Anspruch 1,
bei dem das zweite externe Protokoll ein anderes Protokoll als das erste externe Protokoll ist.

3. Vorrichtungsnetzwerk nach einem der vorstehenden Ansprüche,
bei dem die Konvergenzschichten dazu ausgebildet sind, inhaltsspezifische Verbindung zwischen den Netzwerkvorrichtungen des Vorrichtungsnetzwerks zu errichten und freizugeben, wobei eine inhaltsspezifische Verbindung zwischen einer Konvergenzschicht der ersten Netzwerkvorrichtung, die einen bestimmten Inhalt unterstützt, und einer jeweiligen Konvergenzschicht der zweiten Netzwerkvorrichtung, die denselben Inhalt unterstützt, aufgebaut wird.

4. Vorrichtungsnetzwerk nach einem der vorstehenden Ansprüche,
wobei die Konvergenzschichten dazu ausgebildet sind, für die inhaltsspezifische Verbindung eine feste Bandbreite zu reservieren, wenn sie für einen Inhalt gilt, der ein Dienstequalitätsmerkmal erfordert.

5. Vorrichtungsnetzwerk nach einem der vorstehenden Ansprüche,
wobei die Konvergenzschichten dazu ausgebildet sind, für jede inhaltsspezifische Verbindung den durch diese unterstützen Inhalt zu registrieren.

6. Vorrichtungsnetzwerk nach einem der vorstehenden Ansprüche,
das ein drahtloses Lokalbereichsnetz (WLAN), insbesondere ein HiperLAN/2-Netzwerk, ist.

7. Vorrichtungsnetzwerk nach einem der vorstehenden Ansprüche,
bei dem der Austausch von Steuerungsmeldungen und Datenpaketen zwischen verschiedenen Netzwerkvorrichtungen des Vorrichtungsnetzwerks gemäß einem TDMA-Übertragungsschema erfolgt.

8. Vorrichtungsnetzwerk nach Anspruch 7,
bei dem die Konvergenzschichten dazu ausgebildet sind, eine Gruppe von Zeitschlitzen des TDMA-Übertragungsschemas für eine bestimmte inhaltsspezifische Verbindung zu reservieren.

9. Verfahren zum Übertragen von Datenverkehr über ein Vorrichtungsnetzwerk,
mit den folgenden Schritten:
Erkennen des Inhalts eines ersten externen Verkehrs gemäß einem ersten externen Protokoll;
Weiterleiten des ersten externen Verkehrs abhängig vom erkannten Inhalt an eine Konvergenzschicht (25, 26, 44, 45), die speziell zum Handhaben des jeweiligen erkannten Inhalts vorhanden ist;
Wandeln des ersten externen Verkehrs gemäß dem ersten externen Protokoll in Netzwerkverkehr gemäß einem internen Protokoll;
Übertragen des Netzwerkverkehrs gemäß dem internen Protokoll an eine zweite Netzwerkvorrichtung (28, 29) des Vorrichtungsnetzwerks (21) über inhaltsspezifische Verbindungen, die für die Erfordernisse des jeweils erkannten Inhalts geeignet sind; und
Wandeln, seitens der zweiten Netzwerkvorrichtung (28, 29), des Netzwerkverkehrs gemäß dem internen Protokoll in einen zweiten externen Verkehr gemäß einem zweiten externen Protokoll.

10. Verfahren nach Anspruch 9,
bei dem zwischen zwei Netzwerkvorrichtungen inhaltsspezifische Verbindungen aufgebaut werden, bevor der Netzwerkverkehr zwischen ihnen entsprechend dem Inhalt übertragen wird.

11. Verfahren nach Anspruch 9 oder 10,
bei dem die inhaltsspezifische Verbindung zwischen den zwei Netzwerkvorrichtungen aufgehoben wird, nachdem der Netzwerkverkehr zwischen ihnen entsprechend dem Inhalt übertragen wurde.

12. Computerprogrammerzeugnis mit Computerprogrammmodulen, die dazu ausgebildet sind, die in einem der Ansprüche 9 bis 11 definierten Verfahrensschritte auszuführen,
wobei ein erstes Computerprogrammmodul, wenn es auf einer ersten Netzwerkvorrichtung läuft, dafür sorgt, dass diese die folgenden Schritte ausführt:
Erkennen des Inhalts eines ersten externen Verkehrs gemäß einem ersten externen Protokoll;
Weiterleiten des ersten externen Verkehrs abhängig vom erkannten Inhalt an eine Konvergenzschicht (25, 26, 44, 45), die speziell zum Handhaben des jeweiligen erkannten Inhalts vorhanden ist;
Wandeln des ersten externen Verkehrs gemäß dem ersten externen Protokoll in Netzwerkverkehr gemäß einem internen Protokoll;
Übertragen des Netzwerkverkehrs gemäß dem internen Protokoll an eine zweite Netzwerkvorrichtung (28, 29) des Vorrichtungsnetzwerks (21) über inhaltsspezifische Verbindungen, die für die Erfordernisse des jeweils erkannten Inhalts geeignet sind; und
wobei ein zweites Computerprogrammmodul, wenn es auf einer zweiten Netzwerkvorrichtung läuft, dafür sorgt, dass diese die folgenden Schritte ausführt:
Wandeln, seitens der zweiten Netzwerkvorrichtung (28, 29), des Netzwerkverkehrs gemäß dem internen Protokoll in einen zweiten externen Verkehr gemäß einem zweiten externen Protokoll.

## Revendications

1. Réseau de dispositifs comprenant au moins un premier (20) et un second (28) dispositifs de réseau,
le premier dispositif de réseau (20) comprenant :
- une couche de détection de contenu et de routage (24, 43) destinée à détecter le contenu d'un premier trafic externe (22, 23) d'un premier protocole externe reçu par ledit premier dispositif de réseau (20), et destinée à router ledit premier trafic externe (22, 23), en fonction du contenu détecté, vers une couche de convergence (25, 26, 44, 45) dédiée à la gestion du contenu respectif,
- un ensemble de couches de convergence (25, 26, 44, 45) conçues pour convertir le premier trafic externe (22, 23) du premier protocole externe en un trafic de réseau d'un protocole interne, et destinées à échanger le trafic de réseau avec d'autres dispositifs de réseau (28, 29) dudit réseau de dispositifs (21) par l'intermédiaire de connexions spécifiques au contenu, grâce à quoi lesdites connexions spécifiques au contenu sont appropriées pour les exigences du contenu détecté respectif, et avec
ledit premier dispositif de réseau qui est conçu pour transmettre le trafic de réseau du protocole interne à un second dispositif de réseau (28) dudit réseau de dispositifs (21) par l'intermédiaire desdites connexions spécifiques au contenu, et avec
le second dispositif de réseau (28) comprenant
- un ensemble de couches de convergence (25, 26, 44, 45) conçues pour échanger un trafic de réseau du protocole interne avec d'autres dispositifs de réseau (20, 34) dudit réseau de dispositifs (21) par l'intermédiaire desdites connexions spécifiques au contenu, et destinées à convertir le trafic de réseau du protocole interne en un second trafic externe (33, 31) d'un second protocole externe.

2. Réseau de dispositifs selon la revendication 1,
dans lequel le second protocole externe est un protocole différent du premier protocole externe.

3. Réseau de dispositifs selon l'une quelconque des revendications précédentes,
dans lequel les couches de convergence sont conçues pour établir et libérer les connexions spécifiques au contenu entre les dispositifs de réseau dudit réseau de dispositifs, une connexion spécifique au contenu étant établie entre une couche de convergence du premier dispositif de réseau qui supporte un certain contenu et une couche de convergence respective du second dispositif de réseau qui supporte le même contenu.

4. Réseau de dispositifs selon l'une quelconque des revendications précédentes,
dans lequel les couches de convergence sont conçues pour réserver une bande passante fixe pour ladite connexion spécifique au contenu dans le cas où ladite connexion spécifique au contenu est destinée à un contenu qui nécessite une caractéristique de qualité de service.

5. Réseau de dispositifs selon l'une quelconque des revendications précédentes,
dans lequel les couches de convergence sont conçues pour enregistrer, pour chaque connexion spécifique au contenu, le contenu supporté par ladite connexion spécifique au contenu.

6. Réseau de dispositifs selon l'une quelconque des revendications précédentes,
dans lequel ledit réseau de dispositifs est un réseau local sans fil (WLAN), et en particulier un réseau HiperLAN/2.

7. Réseau de dispositifs selon l'une quelconque des revendications précédentes,
dans lequel l'échange de messages de commande et de paquets de données entre différents dispositifs de réseau dudit réseau de dispositifs est effectué conformément à un principe de transmission à accès TDMA.

8. Réseau de dispositifs selon la revendication 7,
dans lequel les couches de convergence sont conçues pour réserver un ensemble de tranches de temps dudit principe de transmission à accès TDMA pour une certaine connexion spécifique au contenu.

9. Procédé de transmission d'un trafic de données par l'intermédiaire d'un réseau de dispositifs, comprenant les étapes de :
- détection du contenu d'un premier trafic externe d'un premier protocole externe,
- routage dudit premier trafic externe, en fonction du contenu détecté, vers une couche de convergence (25, 26, 44, 45) dédiée à la gestion du contenu détecté respectif,
- conversion du premier trafic externe du premier protocole externe en un trafic de réseau d'un protocole interne,
- transmission du trafic de réseau du protocole interne à un second dispositif de réseau (28, 29) dudit réseau de dispositifs (21) par l'intermédiaire de connexions spécifiques au contenu, grâce à quoi lesdites connexions spécifiques au contenu sont appropriées pour les exigences du contenu détecté respectif,
- conversion, sur la partie du second dispositif de réseau (28, 29), du trafic de réseau du protocole interne en un second trafic externe d'un second protocole externe.

10. Procédé selon la revendication 9, dans lequel
des connexions spécifiques au contenu sont établies entre deux dispositifs de réseau avant la transmission dudit trafic de réseau entre lesdits deux dispositifs de réseau conformément audit contenu.

11. Procédé selon la revendication 9 ou 10,
dans lequel, après que le trafic de réseau entre lesdits deux dispositifs de réseau a été transmis conformément audit contenu, ladite connexion spécifique au contenu entre lesdits deux dispositifs de réseau est libérée.

12. Produit de programme informatique,
comprenant des modules de programme informatique conçus pour exécuter les étapes de procédé telles que définies dans l'une quelconque des revendications 9 à 11,
- grâce à quoi un premier module de programme informatique, lorsqu'il est exécuté sur un premier dispositif de réseau, amène ce dispositif de réseau à exécuter les étapes consistant à :
- détecter un contenu d'un premier trafic externe d'un premier protocole externe,
- router ledit premier trafic externe, en fonction du contenu détecté, vers une couche de convergence (25, 26, 44, 45) dédiée à la gestion du contenu détecté respectif,
- convertir le premier trafic externe du premier protocole externe en un trafic de réseau d'un protocole interne,
- transmettre le trafic de réseau du protocole interne à un second dispositif de réseau (28, 29) dudit réseau de dispositifs (21) par l'intermédiaire de connexions spécifiques au contenu, grâce à quoi lesdites connexions spécifiques au contenu sont appropriées pour les exigences du contenu détecté respectif,
- grâce à quoi un second module de programme informatique, lorsqu'il est exécuté sur un second dispositif de réseau, amène ce second dispositif de réseau à exécuter l'étape consistant à :
- convertir, sur la partie du second dispositif de réseau (28, 29), le trafic de réseau du protocole interne en un second trafic externe d'un second protocole externe.
